# EUROPÄISCHE PATENTSCHRIFT

(11) **EP 2 989 704 B1**
(45) Veröffentlichungstag und Bekanntmachung des Hinweises auf die Patenterteilung: **05.07.2017**
(21) Anmeldenummer: 14720479.6
(22) Anmeldetag: 02.04.2014
(51) Int. Cl.: H02G 3/22, H02G 15/013

(54) **KABELSATZ, SEPARATOR SOWIE VERFAHREN ZUM HERSTELLEN EINES KABELSATZES**
CABLE SET, SEPARATOR AND METHOD FOR PRODUCING A CABLE SET
FAISCEAU DE CÂBLES, SÉPARATEUR ET PROCÉDÉ PERMETTANT DE FABRIQUER UN FAISCEAU DE CÂBLES

(30) Priorität: 23.04.2013 DE 102013006944
(43) Veröffentlichungstag der Anmeldung: 02.03.2016
(73) Patentinhaber: LEONI Bordnetz-Systeme GmbH, 97318 Kizingen (DE)
(72) Erfinder: KÄFER, Bernd, 97320 Mainstockheim (DE); LACKINGER, Andreas, 97199 Ochsenfurt (DE); HEIN, Gerhard, 97215 Uffenheim (DE)
(74) Vertreter: FDST Patentanwälte
(86) Internationale Anmeldenummer: PCT/EP2014/000871
(87) Internationale Veröffentlichungsnummer: WO 2014/173491

(56) Entgegenhaltungen:
- EP-A1- 0 635 921
- JP-A- H06 233 435
- JP-A- 2009 136 113
- JP-A- 2012 165 485

## Beschreibung

Die Erfindung betrifft einen Kabelsatz, umfassend einen Leitungsstrang mit mehreren Leitungen, die von einem Abdichtelement aus einem Dichtmaterial, insbesondere eine Abdichttülle umgeben sind, wobei zwischen den Leitungen ein Separator eingelegt ist. Die Erfindung betrifft weiterhin einen Separator zum Einlegen zwischen Leitungen eines Leitungsstrangs beim Herstellen eines solchen Kabelsatzes sowie ein Verfahren zum Herstellen eines solchen Kabelsatzes.

Bei einem Kabelsatz werden üblicherweise eine Vielzahl von einzelnen Leitungen, insbesondere elektrische Leitungen, in einem Leitungsstrang geführt. Häufig ist es erforderlich, dass diese Leitungen beim Übergang zwischen zwei Teilräumen, beispielsweise beim Übergang von einem Trockenbereich zu einem Nassbereich, zuverlässig abgedichtet werden. Zu diesem Zweck ist der durch die Leitungen gebildete Leitungsstrang zumindest im Übergangsbereich von einem Dichtmaterial umgeben, welches insbesondere eine so genannte Tülle bildet. Diese wird üblicherweise durch einen Gieß-,Spritz- oder auch Schäumprozess hergestellt. Hierzu wird der Leitungsstrang in eine Werkzeugform eingelegt und anschließend wird das Dichtmaterial in flüssiger oder zähflüssiger Form eingebracht, so dass die einzelnen Leitungen vom Dichtmaterial umgeben werden.

Hierbei muss zuverlässig gewährleistet sein, dass das Dichtmaterial in alle Zwischenräume zwischen den einzelnen Leitungen eindringt, um insbesondere eine sogenannte Längswasserdichtigkeit zu erreichen. Insbesondere bei Leitungssträngen mit einer Vielzahl von elektrischen Einzelleitungen und mit einem vergleichsweise großen Durchmesser von beispielsweise mehr als 20 mm, insbesondere mehr als 30 mm, ist es jedoch prozesstechnisch schwierig zuverlässig sicherzustellen, dass auch die Leitungen im Zentrum zuverlässig vom Dichtmaterial umgeben sind.

Derartige Kabelsätze werden insbesondere beispielsweise im Kraftfahrzeugbereich eingesetzt, um diesen aus einem Trockenbereich in einen Nassbereich zu überführen. Die Tülle wird dabei vorzugsweise dichtend an einer Trennwand befestigt, so dass auch eine Durchführöffnung in der Trennwand abgedichtet ist. Bei dem Kabelsatz kann es sich dabei um einen geschäumten oder gespritzten Kabelsatz handeln, der zumindest über weite Bereiche mit einem gespritzten, geschäumten oder gegossenen Schutzmantel umgeben ist, der zugleich die Abdichttülle ausformt. Alternativ hierzu ist lediglich im Übergangsbereich eine derartige Abdichttülle ausgebildet und im restlichen Bereich des Kabelsatzes ist der Leitungsstrang beispielsweise lediglich bandiert oder in sonstiger Weise zusammengehalten. Endseitig der einzelnen Leitungen sind üblicherweise vorkonfektionierte Stecker befestigt, so dass der Kabelsatz insgesamt eine vorkonfektionierte, einbaufertige Baueinheit darstellt.
Aus der EP 1 303 018 A1 ist eine elastische Tülle zur Abdichtung einer Durchführung vom Innenraum eines Kraftfahrzeugs zum Motorraum zu entnehmen ist. Die Tülle bildet hierbei einen Außenmantel, in den ein Separator eingesetzt ist, welcher mehrere radial orientierte Arme aufweist, zwischen denen einzelne Fächer ausgebildet sind, in denen jeweils Leitungen gruppenweise angeordnet sind. Bei der Herstellung wird die Tülle über den Separator gezogen und als Druckbehälter genutzt, um den Tülleninnenraum mit einer Schaum- und Dichtmasse auszufüllen. Hierzu ist an einer Zentralbohrung des Separators ein Schlauch angeschlossen, welcher aus der Tülle heraus nach außen geführt ist und über den die Dichtmasse in den Tülleninnenraum eingespritzt wird.

Aus der JP H06 233 435 A ist ein Separator nach dem Oberbegriff des Anspruchs 1, 9 und/oder 11 zu entnehmen, welcher einen zentralen, sich in Längsrichtung des Kabelbündels erstreckenden Injektionskanal für eine Dichtmasse aufweist, der mit einer stirnseitigen sowie mit mehreren umfangsseitigen Austrittsöffnungen für die Dichtmasse ausgebildet ist.
Aus der EP 1 107 397 A2 ist ebenfalls eine Kabeltülle zu entnehmen. Bei dieser ist zentral im Inneren des Leitungsbündels ein Schutzschlauch angeordnet, in dem Lichtwellenleiter geführt sind. Durch den Schutzschlauch sind die Lichtwellenleiter beim Spritzvorgang der Tülle vor einer thermischen und mechanischen Beanspruchung geschützt. Um eine Längswasserdichtigkeit im Bereich der Tülle zu erreichen, weist der Schutzschlauch im Bereich der Tülle einen Querkanal auf, über den beim Spritz- oder Gießvorgang Dichtmaterial in das Innere des Schutzschlauches eindringt.

Ausgehend hiervon liegt der Erfindung die Aufgabe zugrunde, einen derartigen Kabelsatz insbesondere für den Fahrzeugbereich zu ermöglichen, bei dem prozesssicher in einfacher Weise eine Längswasserdichtigkeit auch bei größeren Leitungsstrang-Durchmessern gewährleistet ist.

Die Aufgabe wird gemäß der Erfindung gelöst durch einen Kabelsatz mit den Merkmalen des Anspruchs 1. Dieser umfasst einen Leitungsstrang mit mehreren Leitungen, die von einem Abdichtelement, insbesondere einer Abdichttülle aus einem Dichtmaterial, insbesondere einem geschäumten Material, umgeben sind. Alternativ zu einem geschäumten Material kann das Abdichtelement auch durch Gießen oder Spritzen ausgebildet sein. Der Einfachheit halber wird nachfolgend von geschäumtem Dichtmaterial gesprochen. Zur Gewährleistung der Längswasserdichtigkeit ist zwischen den Leitungen ein Separator eingelegt, welcher zumindest einen Verteilungskanal aufweist, welcher endseitig, insbesondere stirnendseitig eine Angussöffnung sowie weiterhin seitliche Durchflussöffnungen zu den Leitungen aufweist. Der Verteilungskanal ist dabei mit dem Dichtmaterial angefüllt. Insgesamt sind die einzelnen Leitungen im Dichtmaterial vollständig eingebettet, also jede einzelne Leitung ist vom Dichtmaterial vollständig umgeben, so dass eine zuverlässige Längswasserdichtigkeit erzielt ist.

Die Aufgabe wird erfindungsgemäß weiterhin gelöst durch einen derartigen Separator mit den Merkmalen des Anspruchs 9 sowie durch ein Verfahren zum Herstellen eines derartigen Kabelsatzes mit den Merkmalen des Anspruchs 11. Bevorzugte Weiterbildungen sind in den Unteransprüchen niedergelegt.

Der Verteilungskanal ist insoweit Teil des Separators als dass über den Verteilungskanal die Leitungen voneinander separiert sind. Der Verteilungskanal erstreckt sich daher allgemein von einem zentralen Bereich zu einem äußeren Bereich und verläuft dabei insbesonders in radialer Richtung. Der Verteilungskanal kann jedoch auch zumindest in Teilbereichen in Umfangsrichtung verlaufen, je nachdem, welche Form der Separator selbst aufweist. Der Verteilungskanal erstreckt sich bevorzugt über einen Großteil der radialen Ausdehnung des Leitungsstrangs. Der Verteilungskanal bildet daher einen Arm oder Trennsteg des Separators. Der Separator, der einen und vorzugsweise mehrere Trennstege aufweist, ist daher selbst zumindest in einem Teilbereich als eine Hohlstruktur ausgebildet, über die eine Verteilung der Dichtmasse erfolgt, nämlich über den zumindest einen als Trennsteg ausgebildeten Verteilungskanal.

Zum Herstellen des Kabelsatzes wird der Separator zunächst zwischen den Leitungen eingebracht, so dass diese durch den Separator zumindest in Teilgruppen getrennt sind. Der Leitungsstrang mit dem zwischen die einzelnen Leitungen eingelegten Separator wird anschließend bevorzugt in eine Werkzeugform eingelegt, und zwar derart, dass die Angussöffnung mit einem Angusskanal der Werkzeugform verbunden ist. Anschließend wird über den Angusskanal ein im Ausgangszustand fluides Dichtmaterial eingebracht, wobei über den Separator und dessen Verteilungskanal das Dichtmaterial in das Innere zwischen die einzelnen Leitungen geführt und verteilt wird. Dadurch wird sichergestellt, dass Dichtmaterial zuverlässig insbesondere auch in das Zentrum des Leitungsstrangs geleitet wird, so dass die Leitungen vollständig in dem Dichtmaterial eingebettet werden. Nach dem Aushärten des Dichtmaterials wird der Kabelsatz dann anschließend aus der Werkzeugform entnommen.

Der besondere Vorteil hierbei ist darin zu sehen, dass über den innen hohlen Separator das Dichtmaterial ins Innere des Leitungsstrangs geführt wird. Bei üblichen Herstellverfahren wird das Dichtmaterial lediglich außenseitig über die Angusskanäle der Werkzeugform eingebracht, wodurch in der Strangmitte Hohlräume verbleiben können. Der Separator ist daher insgesamt als ein Hilfsmittel für die prozesssichere Ausbildung einer Abdichttülle anzusehen, welches nach dem Herstellvorgang im Endprodukt verbleibt und selbst auch mit dem Dichtmaterial ausgefüllt ist.

Vorzugsweise weist dabei der Separator mehrere jeweils als Verteilungskanäle ausgebildete Arme auf, zwischen denen die Leitungen vorzugsweise jeweils in Gruppen getrennt voneinander gehalten sind. Dadurch werden mehrere getrennte Teilbereiche ausgebildet, die jeweils einzelweise über die Verteilungskanäle und ihre Durchflussöffnungen mit dem Dichtmaterial versorgt werden. Zumindest einer der Verteilungskanäle weist eine Angussstelle zum Einbringen des Dichtmaterials auf. Die Hohlräume der einzelnen Verteilungskanäle, über die die Verteilung des Dichtmaterials erfolgt, sind dabei zweckdienlicherweise miteinander verbunden. Die einzelnen Verteilungskanäle sind dabei üblicherweise winklig zueinander orientiert, beispielsweise nach Art von Speichen.

Zweckdienlicherweise sind die Verteilungskanäle dabei kreuz- oder sternförmig angeordnet, um eine möglichst gleichmäßige Verteilung zu erzielen. Durch den mittigen Kreuzungspunkt sind die Leitungen im Zentrum etwas nach außen verdrängt. Am Kreuzungspunkt sind die Hohlräume insbesondere miteinander verbunden.

Für eine zuverlässige Verteilung sind über die Länge des Verteilungskanals mehrere Durchflussöffnungen verteilt ausgebildet. Die Durchflussöffnungen erstrecken sich dabei vorzugsweise über die gesamte Länge des Verteilungskanals, so dass das Dichtmaterial über die gesamte Länge aus dem inneren Hohlraum des Verteilungskanals nach außen zu den Leitungen austreten kann.

Zweckdienlicherweise weisen mehrere der Verteilungskanäle stirnseitige Angussöffnungen für das Dichtmaterial auf, die entsprechend auch mit mehreren Angusskanälen in der Werkzeugform beim Herstellungsprozess kommunizieren. Hierdurch wird ebenfalls eine homogene und gleichmäßige Verteilung des Dichtmaterials auf alle Teilbereiche innerhalb des Leitungsstrangs gewährleistet.

Um eine zuverlässige Fixierung und Positionierung des Separators in der Werkzeugform zu gewährleisten, weist der Separator zumindest ein, vorzugsweise mehrere Fixierelemente auf, mit denen der Separator in der Werkzeugform gehalten ist. Dadurch ist der Separator beim Befüllvorgang mit dem Dichtmaterial und dem anschließenden Aufschäumen des Dichtmaterials vor einem Verrutschen innerhalb der Werkzeugform gesichert. Die Fixierelemente sind dabei vorzugweise stirnendseitig am Ende der einzelnen Arme bzw. Verteilungskanäle ausgebildet, insbesondere an allen Stirnseiten der einzelnen Arme und insbesondere auch im Bereich der Angussöffnungen.

Die Fixierelemente liegen daher in einer entsprechenden Fixieraufnahme in der Werkzeugform ein. Diese ist in der Wandung der Werkzeugform eingearbeitet, so dass also die Fixierelemente nicht vollständig vom Dichtmaterial umgeben werden. Dies führt dazu, dass in zweckdienlicher Ausgestaltung das zumindest eine Fixierelement durch das Dichtmaterial nach außen hindurchtritt und über die Au-βenoberfläche übersteht, so dass es von außen sichtbar ist. Dies ermöglicht in zweckdienlicher Weise eine Prozess- oder Qualitätskontrolle, um überprüfen zu können, ob ein Separator eingelegt ist und ob dieser richtig positioniert ist.

Die einzelnen Leitungen des Leitungsstrangs sind üblicherweise mittels einer Bandierung umgeben. Hierzu wird ein Tape oder Wickelband üblicherweise spiralförmig um die einzelnen Leitungen gewickelt. Diese Bandierung ist in zweckdienlicher Ausgestaltung im Bereich des Separators unterbrochen, um ein zuverlässiges Einbetten der einzelnen Leitungen im Dichtmaterial zu gewährleisten, ohne dass dies von der Bandierung behindert werden würde. Durch die Einbringung des Separators wird hierbei der besondere Vorteil erzielt, dass diese Unterbrechung der Bandierung sehr kurz ausfallen kann, also insgesamt nur über eine vergleichsweise kurze Länge erfolgen muss. Zweckdienlicherweise ist die Bandierung dabei lediglich im Bereich der Breite des Separators oder dem 1- bis 3-Fachen der Breite des Separators unterbrochen.

Für das zuverlässige Einbringen von Dichtmaterial in den Verteilungskanal weist der Separator im Ausgangszustand an zumindest einer der Angussöffnungen vorzugsweise einen Angussstutzen auf, welcher sich in den Angusskanal der Werkzeugform hinein erstreckt. Der Angussstutzen überführt den Angusskanal in den Verteilungskanal. Der Angussstutzen liegt dabei vorzugsweise passgenau und radial abdichtend im Angusskanal ein, dient daher insoweit auch als Fixierelement. Dieser Angussstutzen wird anschließend zweckdienlicherweise wieder entfernt, beispielsweise abgeschnitten oder abgebrochen. Um dies in einfacher Weise und prozesssicher zu gewährleisten, ist der Angussstutzen vorzugsweise über eine Sollbruchstelle mit dem restlichen Verbindungskanal verbunden.

Aufgrund der Anordnung des Separators ist insgesamt eine deutlich zuverlässigere Verteilung des Dichtmaterials erzielt, so dass insgesamt die Länge des ausgebildeten Abdichtelements im Vergleich zu herkömmlichen Herstellverfahren verkürzt werden kann, bei gleichzeitig gleicher oder verbesserter Längswasserdichtigkeit.

Ein Ausführungsbeispiel der Erfindung wird nachfolgend anhand der Figuren näher erläutert. Diese zeigen jeweils in vereinfachten Darstellungen:
- Fig. 1: einen Querschnitt durch einen Kabelsatz im Bereich eines Separators,
- Fig. 2: eine stark vereinfachte Seitenansicht eines Kabelsatzes mit einem als Abdichttülle ausgebildeten Abdichtelement,
- Fig. 3: eine perspektivische Darstellung einer Ausführungsvariante des Separators sowie
- Fig. 4: eine ausschnittsweise und teilweise im Aufriss dargestellte Werkzeugform mit darin einliegendem Leitungsstrang mit Separator.

In den Figuren sind gleich wirkende Teile mit den gleichen Bezugszeichen versehen.

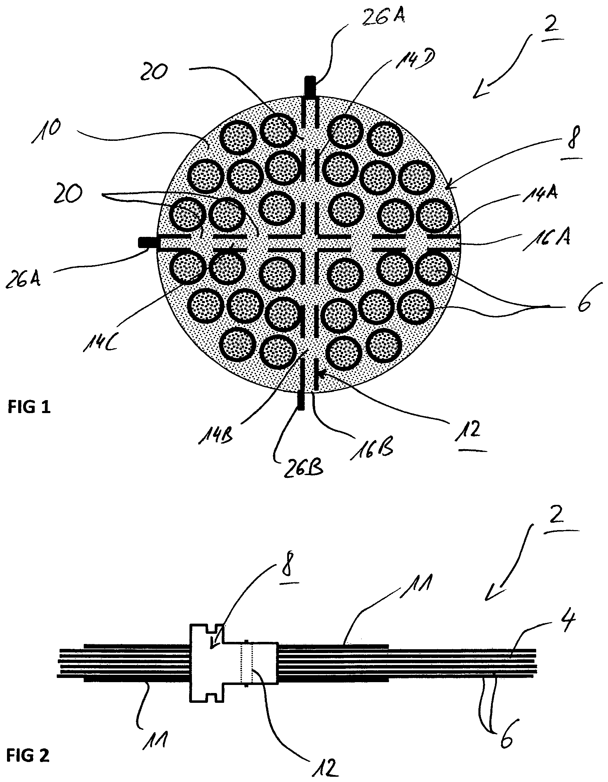

Der in den Fig. 1 und 2 dargestellte Kabelsatz 2 umfasst einen Leitungsstrang 4 mit einer Vielzahl von einzelnen Leitungen 6, die insbesondere als isolierte elektrische Leitungen ausgebildet sind. Der Kabelsatz 2 weist ein Abdichtelement 8 auf, welches insbesondere als Abdichttülle ausgebildet ist. Diese dient zur Durchführung des Kabelsatzes 2 durch eine Wandöffnung, beispielsweise von einem Trockenbereich zu einem Nassbereich. Der Kabelsatz 2 ist insbesondere zur Verwendung bei Kraftfahrzeugen ausgebildet und ist bei solchen verbaut.

Das Abdichtelement 8 besteht aus einem Dichtmaterial 10, in dem die Leitungen 6 eingebettet sind, und zwar derart, dass die einzelnen Leitungen 6 jeweils vollumfänglich vom Dichtmaterial 10 umgeben sind.

Der Leitungsstrang 4 ist zumindest in Teilbereichen von einer Bandierung 11 umgeben, welche innerhalb des Abdichtelements 8 unterbrochen ist. An den einzelnen Leitungen 6 können endseitig bereits Stecker etc. befestigt sein, so dass es sich bei dem Kabelsatz 2 insgesamt um einen vorkonfektionierten, einbaufertigen Kabelsatz handelt, der beispielsweise bei der Produktion eines Kraftfahrzeugs nur noch in die vorgesehene Position eingelegt und über die Steckverbinder mit den entsprechenden Komponenten verbunden zu werden braucht. Das Abdichtelement 8 wird hierbei an der jeweiligen Durchlassöffnung in geeigneter Weise befestigt, so dass auch diese abgedichtet ist.

Im Abdichtelement 8 ist weiterhin ein Separator 12 angeordnet, welcher im Ausführungsbeispiel durch vier kreuzförmig angeordnete Arme gebildet ist. Jeder der Arme bildet dabei einen Verteilungskanal 14A-D aus. Der Separator 12 ist insbesondere als ein Kunststoff-Spritzgussteil ausgebildet. Zweckdienlicherweise ist der Separator 12 dabei aus mehreren Teilen, insbesondere zwei Halbschalen ausgebildet, die beispielsweise über Verrasten miteinander verbunden sind. Die beiden Halbschalen sind dabei vorzugsweise als Gleichteile ausgebildet. Die einzelnen Verbindungskanäle 14A-D sind miteinander im Zentrum verbunden. Der Separator 12 weist im Ausführungsbeispiel zwei Angussöffnungen 16A,B auf, wobei die Angussöffnung 16A als Haupt-Angussöffnung ausgebildet ist.

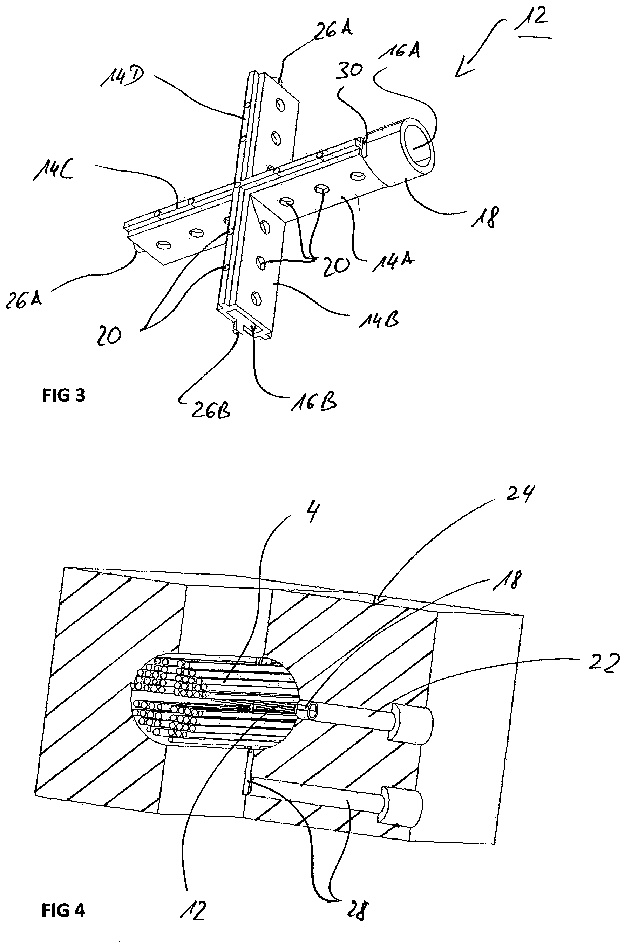

Wie insbesondre aus Fig. 3 hervorgeht, ist im Bereich der Haupt-Angussöffnung 16A ein Angussstutzen 18 angeformt, welcher als Hohlzylinder ausgebildet ist. Jeder der Verbindungskanäle 14A-D weist insbesondere gleichmäßig verteilt angeordnete Durchflussöffnungen 20 auf, welche über die gesamte Länge des Verbindungskanals 14A-D verteilt sind. Die einzelnen Verbindungskanäle 14A-D weisen im Ausführungsbeispiel eine in etwa rechteckförmige Querschnittsprofilierung auf. Entsprechend vermittelt auch der zylinderförmige Angussstutzen 18 zwischen einem kreisförmigen Angusskanal 22 einer Werkzeugform 24 (vgl. hierzu Fig. 4) und dem etwa rechteckförmigen Querschnitt des Verteilungskanals 14A. Zweckdienlicherweise sind die Durchflussöffnungen 20 um den Umfang des jeweiligen Verteilungskanals 14A-D verteilt. Der Verteilungskanal 14A-D ist in alternativer Ausgestaltung als Rohr mit kreisförmigem Querschnitt ausgeführt. Um den Umfang verteilt sind beispielsweise jeweils mehrere, beispielsweise um 120° oder 90° drehversetzt angeordnete Durchflussöffnungen 20 ausgebildet.

Ergänzend sind am Separator 12 noch Fixierelemente 26A,B ausgeformt, die als Fixierzapfen 26A im Falle der Verteilungskanäle 14C,D und als Halbzapfen 26B im Falle des Verteilungskanals 14B ausgebildet sind. Der Halbzapfen 26B ist seitlich zu der Hilfs-Angussöffnung 16B angeordnet. Die zapfenförmigen Fixierungen 26A sind im Ausführungsbeispiel demgegenüber als zylinderförmige Elemente an den End-Stirnseiten der Verteilungskanäle 14C,14D ausgebildet, die an ihren Stirnseiten verschlossen sind.

Wie insbesondere aus Fig. 3 zu entnehmen ist, ist bei dem Separator 12 gemäß dem Ausführungsbeispiel an jedem der Verteilungskanäle 14A-D an den Schmalseiten jeweils ein Steg angeformt, welcher ebenfalls Durchflussöffnungen 20 aufweist. Der Separator 12 weist daher allgemein Durchflussöffnungen 20 auf, die in radialer Richtung sowie in axialer Richtung den Austritt des Dichtmaterials 10 ermöglichen.

Der Separator 12 erstreckt sich nur über einen Teilbereich (Bruchteil) des Abdichtelements 8. Er weist beispielsweise eine sich in Längsrichtung des Leitungsstrangs 2 erstreckende Länge von lediglich wenigen Zentimetern, beispielsweise bis zu 5 cm auf.

Zur Herstellung des Kabelsatzes 2 wird das Abdichtelement 8 mit Hilfe der Werkzeugform 4 im Rahmen eines Spritz-, Gieß- oder Schäumprozesses ausgebildet. Allen Verfahren ist dabei gemeinsam, dass das Dichtmaterial 10 in flüssiger oder zähflüssiger Form zur Ausbildung des Abdichtelements 8 in die Werkzeugform 24 eingebracht wird. Insbesondere handelt es sich bei dem Abdichtelement 8 um ein geschäumtes Bauteil, bei dem also ein üblicherweise zunächst flüssiges Dichtmaterial 10 eingebracht wird, welches anschließend innerhalb der Werkzeugform 24 aufschäumt und dabei aushärtet.

In einem ersten Schritt wird der Separator 12 zwischen die Leitungen 6 des Leitungsstrangs 4 eingeschoben, so dass dieser im Ausführungsbeispiel in vier Teilbereiche mit jeweils mehreren Leitungen 6 unterteilt ist. Der Separator 12 wirkt dabei bereits als Abstandselement, so dass im Zentrum des Leitungsstrangs 4 ein zusätzlicher Freiraum zwischen den einzelnen Leitungs-Paketen ausgebildet ist.

Der mit dem Separator 12 versehene Leitungsstrang 4 wird anschließend in die Werkzeugform 24 eingelegt. Dabei wird der Angussstutzen 18 in den Angusskanal 22 der Werkzeugform eingesteckt. Weiterhin werden die Fixierelemente 26A,B in weiteren hier nicht näher dargestellten Fixier-Aufnahmen formschlüssig aufgenommen. Dadurch ist die Position des Separators 12 innerhalb der Werkzeugform 24 fixiert und der Separator 12 ist auch innerhalb der zu füllenden Kavität der Werkzeugform 24 zentriert.

Im Ausführungsbeispiel der Fig. 4 ist neben dem Haupt-Angusskanal 22 auch noch ein Neben-Angusskanal 28 ausgebildet, welcher mit der Neben-Angussöffnung 16B verbunden ist. Im nächsten Schritt wird schließlich das im Ausgangszustand flüssige oder zähflüssige Dichtmaterial 10 in die Werkzeugform 24 über die Angusskanäle 22,28 eingebracht. Das Dichtmaterial 10 verteilt sich dabei über den Separator 12 und über die einzelnen Verteilungskanäle 14A-D gleichmäßig über den gesamten Querschnitt des Leitungsstrangs 4. Aufgrund der Durchflussöffnungen 20 wird das Dichtmaterial in das Innere des Leitungsstrangs 4 geführt und verlässt die Verteilungskanäle 14A-D in radialer Richtung sowie in Längsrichtung, die durch die Längsrichtung der Leitungen 6 definiert ist.

Schließlich wird nach Abschluss des Gieß- oder Schäumvorgangs und Aushärten des Dichtmaterials 10 die Werkzeugform geöffnet und der Kabelsatz 2 mit dem ausgebildeten Abdichtelement 8 entnommen. Anschließend wird bei Bedarf noch der Angussstutzen 18 entfernt bzw. abgeschlagen oder abgeschnitten. Hierzu ist der Angussstutzen 18 mit dem restlichen Verteilungskanal 14A über eine Sollbruchstelle 30 verbunden.

Die Fixierelemente 26A,B können ebenfalls abgeschlagen oder entfernt werden. Im Ausführungsbeispiel der Fig. 1 und 2 sind sie jedoch weiterhin als über die Oberfläche des Abdichtelements 8 überstehende Elemente weiterhin sichtbar. Dies dient insbesondere auch der Qualitätskontrolle, um feststellen zu können, ob ein Separator 12 enthalten ist und ob dieser auch an der richtigen Position positioniert ist.

Durch den Separator 12 ist daher insgesamt ein verteiltes Eindringen des Dichtmaterials 10 beim Herstellvorgang des Abdichtelements 8 erreicht, so dass zuverlässig auch bei dicken Leitungssträngen 4 ein allseitiges Umfließen einer jeweiligen einzelnen Leitung zuverlässig gewährleistet ist. Dadurch ist eine Längswasserdichtigkeit zuverlässig gegeben. Einzelne (Längs-)Hohlräume mit einem Kapillareffekt entlang der einzelnen Leitungen 6 sind dadurch zuverlässig vermieden.

### Bezugszeichenliste

- 2: Kabelsatz
- 4: Leitungsstrang
- 6: Leitungen
- 8: Abdichtelement
- 10: Dichtmaterial
- 11: Bandierung
- 12: Separator
- 14A-D: Verteilungskanal
- 16A,B: Angussöffnung
- 18: Angussstutzen
- 20: Durchflussöffnung
- 22: Angusskanal
- 24: Werkzeugform
- 26A,B: Fixierelement
- 28: Angusskanal
- 30: Sollbruchstelle

## Patentansprüche

1. Kabelsatz (2), umfassend einen Leitungsstrang (4) mit mehreren Leitungen (6), die von einem Abdichtelement (8) aus einem Dichtmaterial (10), insbesondere eine Abdichttülle, umgeben sind, wobei zwischen den Leitungen (6) ein Separator (12) eingelegt ist
**dadurch gekennzeichnet,**
**dass** der Separator (12) zumindest einen Verteilungskanal (14A-D) aufweist, der als ein Arm des Separators (12) ausgebildet ist, über den die Leitungen (6) voneinander getrennt sind und der hierzu sich von einem zentralen Bereich zu einem äußeren Bereich erstreckt und der endseitig eine Angussöffnung (16A,B) sowie zumindest eine Durchflussöffnung (20) zu den Leitungen (6) aufweist, wobei der Verteilungskanal (14A-D) mit dem Dichtmaterial (10) gefüllt ist.

2. Kabelsatz (2) nach Anspruch 1,
**dadurch gekennzeichnet,**
**dass** der Separator (12) mehrere als Verteilungskanäle (14A-D) ausgebildete Arme aufweist, zwischen denen die Leitungen (6) getrennt voneinander gehalten sind.

3. Kabelsatz (2) nach Anspruch 2,
**dadurch gekennzeichnet,**
**dass** die Verteilungskanäle (14A-D) kreuz- oder sternförmig angeordnet sind.

4. Kabelsatz (2) nach Anspruch 2 oder 3,
**dadurch gekennzeichnet,**
**dass** mehrere der Verteilungskanäle (14A-D) Angussöffnungen (20) für das Dichtmaterial (10) aufweisen.

5. Kabelsatz (2) nach einem der vorhergehenden Ansprüche,
**dadurch gekennzeichnet,**
**dass** in dem Verteilungskanal (14A-D) mehrere über die Länge des Verteilungskanals (14A-D) verteilt angeordnete Durchflussöffnungen (20) ausgebildet sind.

6. Kabelsatz (2) nach einem der Ansprüche 2 bis 5,
**dadurch gekennzeichnet,**
**dass** zumindest einige der Verteilungskanäle (14A-D) ein Fixierelement (26A,B) zum Fixieren des Separators (12) in einer Werkzeugform (24) aufweisen.

7. Kabelsatz (2) nach Anspruch 6,
**dadurch gekennzeichnet,**
**dass** das zumindest eine Fixierelement (26A,B) durch das Dichtmaterial (10) nach außen hindurchtritt, so dass es von außen sichtbar ist.

8. Kabelsatz (2) nach einem der vorhergehenden Ansprüche,
**dadurch gekennzeichnet,**
**dass** der Leitungsstrang (4) von einer Bandierung (11) umgeben ist, die im Bereich des Separators (12) unterbrochen ist.

9. Separator (12) zum Einlegen zwischen Leitungen (6) eines Leitungsstranges (4) beim Herstellen eines Kabelsatzes (2) nach einem der vorhergehenden Ansprüche,
**gekennzeichnet durch**
zumindest einen als Arm des Separators (12) ausgebildeten Verteilungskanal (14A-D)zum Trennen der Leitungen (6), der sich von einem zentralen Bereich zu einem äußeren Bereich erstreckt und der endseitig eine Angussöffnung (16A,B) sowie zumindest eine Durchflussöffnung (20) aufweist.

10. Separator (12) nach Anspruch 9,
**dadurch gekennzeichnet,**
**dass** an der Angussöffnung (16A) ein Angussstutzen (18) ausgebildet ist, der bevorzugt mit einer Sollbruchstelle (30) mit dem Verteilungskanal (14A) verbunden ist.

11. Verfahren zum Herstellen eines Kabelsatzes (2) nach einem der Ansprüche 1 bis 8, wobei der Kabelsatz (2) einen Leitungsstrang (4) mit mehreren Leitungen (6) sowie mit einem zwischen den Leitungen (6) angebrachten Separator (12) aufweist
**dadurch gekennzeichnet,**
**dass** der Separator (12) zumindest einen Verteilungskanal (14A-D) mit einer Angussöffnung (16A,B) sowie mit zumindest einer Durchflussöffnung (20) zu den Leitungen (6) aufweist und der Verteilungskanal (14A-D) als ein Arm des Separators ausgebildet ist, sich von einem zentralen Bereich zu einem äußeren Bereich erstreckt und die Leitungen (6) voneinander trennt, dass ein im Ausgangszustand fluides Dichtmaterial (10) über den Angusskanal (22,28) eingebracht und über den Verteilungskanal (14A-D) zwischen die einzelnen Leitungen (6) verteilt wird derart, dass die Leitungen (6) vollständig in dem Dichtmaterial (10) eingebettet sind.

12. Verfahren nach Anspruch 11,
**dadurch gekennzeichnet,**
**dass** der Leitungsstrang (4) in eine Werkzeugform gelegt wird und die Angussöffnung (16A,B) mit einem Angusskanal (22,28) der Werkzeugform verbunden wird und dass nach einem Aushärten des Dichtmaterials (10) der Kabelsatz (2) aus der Werkzeugform (24) entnommen wird.

13. Verfahren nach Anspruch 12,
**dadurch gekennzeichnet,**
**dass** der Separator (12) über stirnendseitig am Verteilungskanal (14A-D) angeordnete Fixierelemente (26,B) in der Werkzeugform (24) fixiert ist.

## Claims

1. Cable set (2) comprising a line run (4) with a plurality of lines (6) which are surrounded by a sealing element (8) which is composed of a sealing material (10), in particular a sealing bush, wherein a separator (12) is inserted between the lines (6), **characterized in that** the separator (12) has at least one distribution channel (14A-D) which is in the form of an arm of the separator (12) and by means of which the lines (6) are separated from one another and which, to this end, extends from a central region to an outer region and which has, at the end, a sprue opening (16A, B) and at least one throughflow opening (20) to the lines (6), wherein the distribution channel (14A-D) is filled with the sealing material (10).

2. Cable set (2) according to Claim 1, **characterized in that** the separator (12) has a plurality of arms which are in the form of distribution channels (14A-D) and between which the lines (6) are held separately from one another.

3. Cable set (2) according to Claim 2, **characterized in that** the distribution channels (14A-D) are arranged in the form of a cross or star.

4. Cable set (2) according to Claim 2 or 3, **characterized in that** a plurality of the distribution channels (14A-D) have sprue openings (20) for the sealing material (10).

5. Cable set (2) according to one of the preceding claims, **characterized in that** a plurality of throughflow openings (20) which are arranged in a manner distributed over the length of the distribution channel (14A-D) are formed in the distribution channel (14A-D).

6. Cable set (2) according to one of Claims 2 to 5, **characterized in that** at least some of the distribution channels (14A-D) have a fixing element (26A, B) for fixing the separator (12) in a mould die (24).

7. Cable set (2) according to Claim 6, **characterized in that** the at least one fixing element (26A, B) passes through the sealing material (10) to the outside, so that it is visible from the outside.

8. Cable set (2) according to one of the preceding claims, **characterized in that** the line run (4) is surrounded by a taping (11) which is interrupted in the region of the separator (12).

9. Separator (12) for insertion between lines (6) of a line run (4) during production of a cable set (2) according to one of the preceding claims, **characterized by** at least one distribution channel (14A-D), which is in the form of an arm of the separator (12), for separating the lines (6), which distribution channel extends from a central region to an outer region and which has, at the end, a sprue opening (16A, B) and at least one throughflow opening (20).

10. Separator (12) according to Claim 9, **characterized in that** a sprue nozzle (18) is formed at the sprue opening (16A), the said sprue nozzle preferably being connected to the distribution channel (14A) by way of a predetermined breaking point (30).

11. Method for producing a cable set (2) according to one of Claims 1 to 8, wherein the cable set (2) has a line run (4) with a plurality of lines (6) and with a separator (12) which is fitted between the lines (6), **characterized in that** the separator (12) has at least one distribution channel (14A-D) with a sprue opening (16A, B) and with at least one throughflow opening (20) to the lines (6), and the distribution channel (14A-D) is in the form of an arm of the separator, extends from a central region to an outer region and separates the lines (6) from one another, **in that** a sealing material (10), which is fluid in the initial state, is introduced via the sprue channel (22, 28) and is distributed between the individual lines (6) by means of the distribution channel (14A-D) in such a way that the lines (6) are fully embedded in the sealing material (10).

12. Method according to Claim 11, **characterized in that** the line run (4) is laid into a mould die and the sprue opening (16A, B) is connected to a sprue channel (22, 28) of the mould die, and **in that** the cable set (2) is removed from the mould die (24) after curing of the sealing material (10).

13. Method according to Claim 12, **characterized in that** the separator (12) is fixed in the mould die (24) by means of fixing elements (26, B) which are arranged on the end side of the distribution channel (14A-D).

## Revendications

1. Faisceau de câbles (2), comprenant un harnais de lignes (4) comportant plusieurs lignes (6) qui sont entourées par un élément d'étanchéité (8) constitué d'un matériau d'étanchéité (10), notamment d'un manchon d'étanchéité, dans lequel un séparateur (12) est introduit entre les lignes (6),
**caractérisé en ce que** le séparateur (12) comporte au moins un canal de répartition (14A-D) qui est réalisé sous la forme d'un bras du séparateur (12), par l'intermédiaire duquel les lignes (6) sont séparées les unes des autres, qui s'étend à cet effet d'une région centrale vers une région extérieure et qui comporte, du côté de l'extrémité, une ouverture de moulage (16A,B) ainsi qu'au moins une ouverture de traversée (20) vers les lignes (6), dans lequel le canal de répartition (14A-D) est rempli du matériau d'étanchéité (10).

2. Faisceau de câbles (2) selon la revendication 1,
**caractérisé en ce que** le séparateur (12) comporte plusieurs bras réalisés sous la forme de canaux de répartition (14A-D) entre lesquels les lignes (6) sont maintenues séparées les unes des autres.

3. Faisceau de câbles (2) selon la revendication 2,
**caractérisé en ce que** les canaux de répartition (14A-D) sont agencés en forme de croix ou d'étoile.

4. Faisceau de câbles (2) selon la revendication 2 ou 3,
**caractérisé en ce que** plusieurs des canaux de répartition (14A-D) présentent des ouvertures de moulage (20) pour le matériau d'étanchéité (10).

5. Faisceau de câbles (2) selon l'une quelconque des revendications précédentes,
**caractérisé en ce que** plusieurs ouvertures de traversée (20) disposées de manière répartie sur la longueur du canal de répartition (14A-D) sont formées dans le canal de répartition (14A-D).

6. Faisceau de câbles (2) selon l'une quelconque des revendications 2 à 5,
**caractérisé en ce qu'**au moins certains des canaux de répartition (14A-D) comportent un élément de fixation (26A,B) destiné à fixer le séparateur (12) dans un moule à outils (24).

7. Faisceau de câbles (2) selon la revendication 6,
**caractérisé en ce que** l'au moins un élément de fixation (26A,B) pénètre à travers le matériau d'étanchéité (10) vers l'extérieur de manière à ce qu'il soit visible de l'extérieur.

8. Faisceau de câbles (2) selon l'une quelconque des revendications précédentes,
**caractérisé en ce que** le harnais de lignes (4) est entouré d'un système de bandes (11) qui est interrompu dans la région du séparateur (12).

9. Séparateur (12) destiné à être inséré entre des lignes (6) d'un harnais de lignes (4) lors de la fabrication d'un faisceau de câbles (2) selon l'une quelconque des revendications précédentes,
**caractérisé par** au moins un canal de répartition (14AD) réalisé sous la forme d'un bras du séparateur (12) et destiné à séparer les lignes (6), qui s'étend depuis une région centrale vers une région extérieure et qui comporte, du côté de l'extrémité, une ouverture de moulage (16A, B) ainsi qu'au moins une ouverture de traversée (20).

10. Séparateur (12) selon la revendication 9,
**caractérisé en ce qu'**un manchon de moulage (18) est formé sur l'ouverture de moulage (16A), et **en ce qu'**il est de préférence relié par un point de rupture (30) au canal de répartition (14A).

11. Procédé de fabrication d'un faisceau de câbles (2) selon l'une quelconque des revendications 1 à 8, dans lequel le faisceau de câbles (2) comporte un harnais de lignes (4) muni de plusieurs lignes (6) et comportant également un séparateur (12) monté entre les lignes (6),
**caractérisé en ce que** le séparateur (12) comporte au moins un canal de répartition (14A-D) ayant une ouverture de moulage (16A,B) ainsi qu'au moins une ouverture de traversée (20) vers les lignes (6) et **en ce que** le canal de répartition (14A-D) est réalisé sous la forme d'un bras du séparateur s'étendant depuis une région centrale jusqu'à une région extérieure et séparant les lignes (6) les unes des autres, **en ce qu'**un matériau d'étanchéité (10) fluide à l'état initial est introduit par l'intermédiaire du canal de moulage (22, 28) et est réparti par l'intermédiaire du canal de répartition (14A-D) entre les lignes individuelles (6) de manière à ce que les lignes (6) soient entièrement incorporées au matériau d'étanchéité (10).

12. Procédé selon la revendication 11,
**caractérisé en ce que** le harnais de lignes (4) est configuré sous la forme d'un outil est **en ce que** l'ouverture de moulage (16A,B) est reliée au canal de moulage (22, 28) du moule à outils et **en ce que** le faisceau de câbles (2) est retiré du moule à outils (24) après le durcissement du matériau d'étanchéité (10) du faisceau de câbles (2).

13. Procédé selon la revendication 12,
**caractérisé en ce que** le séparateur (12) est fixé dans le moule à outils (24) par l'intermédiaire d'éléments de fixation (26, B) disposés du côté avant du canal de répartition (14A-D).
